# EUROPEAN PATENT SPECIFICATION

(11) **EP 1 589 322 B1**
(45) Date of publication and mention of the grant of the patent: **21.03.2007**
(21) Application number: 05008785.7
(22) Date of filing: 21.04.2005
(51) Int. Cl.: G01D 5/04, G05G 9/047, B60K 20/04, H01H 25/04

(54) **Device for detecting rotation in two directions and shift lever device**
Vorrichtung zur Detektion einer Drehung in zwei Richtungen und Vorrichtung mit Schalthebel
Dispositif pour détecter la rotation dans deux directions et dispositif comportant un levier de décalage

(30) Priority: 23.04.2004 JP 2004128033
(43) Date of publication of application: 26.10.2005
(73) Proprietor: KABUSHIKI KAISHA TOKAI-RIKA-DENKI-SEISAKUSHO, Niwa-gun, Aichi-ken (JP)
(72) Inventor: Yokoyama, Yoshinobu, Ohguchi-cho Niwa-gun Aichi-ken (JP)
(74) Representative: Goddar, Heinz J.

(56) References cited:
- EP-A- 0 547 598
- EP-A- 0 762 316
- EP-A- 1 239 192
- US-A- 5 156 060
- US-A- 6 139 434

## Description

### BACKGROUND OF THE INVENTION

### Field of the Invention

The present invention relates to a device for detecting rotation in two directions which detects rotation of a rotating body which rotates around axes whose axial directions are in two directions which intersect one another, and to a shift lever device for operating a transmission installed in a vehicle.

### Description of the Related Art

A plurality of shift ranges are set in advance in an automatic transmission of a vehicle. An operating device, for selecting and operating these plural shift ranges is provided in the vehicle. A so-called shift lever device is often used as this type of operation device. There is a so-called "straight-type" shift lever device in which a shift lever rotates only around an axis whose axial direction is, for example, the substantially transverse (left-right) direction of the vehicle. In addition, there is a so-called "gate-type" shift lever device in which, for example, in addition to rotating around an axis whose axial direction is the substantially transverse direction of the vehicle, the shift lever can rotate around an axis whose axial direction is the substantially longitudinal (front-back) direction of the vehicle, so as to operate the shift lever in a zigzag form as seen in plan view.

The gate-type shift lever device has a housing. A member, such as a control shaft or the like which structures the shift lever, is rotatably supported at a pair of side walls of the housing which oppose one another in the substantially transverse direction of the vehicle. Separately from the member such as the control shaft or the like, the shift lever has a lever main body having a bracket. The bracket of the lever main body is mounted to the member such as the control shaft or the like, so as to be able to rotate around an axis whose axial direction is the substantially longitudinal direction of the vehicle.

The distal end side of the lever main body (i.e., the side opposite the bracket), projects upward, or the like, of the housing. When an attempt is made to rotate the lever main body around the axis whose axial direction is the substantially transverse direction of the vehicle, the bracket interferes with the member such as the control shaft or the like, and rotates the member such as the control shaft or the like. In this way, the lever main body rotates around the axis whose axial direction is the substantially transverse direction of the vehicle.

When an attempt is made to rotate the lever main body around the axis whose axial direction is the substantially longitudinal direction of the vehicle, the bracket rotates, with respect to the member such as the control shaft or the like, around the axis whose axial direction is the substantially longitudinal direction of the vehicle. In this way, the lever main body rotates around the axis whose axial direction is the substantially longitudinal direction of the vehicle.

When the shift lever is rotated in this way around the axes whose axial directions are the two directions of the substantially transverse direction of the vehicle and the substantially longitudinal direction of the vehicle, a position detecting means, which is structured by a magnetic sensor or a microswitch or the like, detects the rotational position of the shift lever. The automatic transmission installed in the vehicle is operated on the basis of these results of detection.

The position detecting means, such as that described above which detects the rotational position of the shift lever, must be able to detect rotation of the shift lever wherein the axial direction is the substantially transverse direction of the vehicle, and rotation of the shift lever wherein the axial direction is the substantially longitudinal direction of the vehicle. Therefore, a position detecting means, which is for detecting the rotation of the member such as the control shaft or the like, is generally mounted to one side wall of the pair of side walls of the housing which oppose one another in the substantially transverse direction of the vehicle, and a position detecting means, which is for detecting rotation of the lever main body including the bracket, is mounted to one side wall of the pair of side walls of the housing which oppose one another in the substantially longitudinal direction of the vehicle.

However, there are the drawbacks that there is a large number of steps for assembling the position detecting means from the many directions, and costs are high.

Thus, in the shift lever device disclosed in Japanese Patent Application Laid-Open (JP-A) No. 54-67684, a spherical shaft-supporting portion (a pivot) is formed at the intermediate portion in the longitudinal direction of a shift lever at whose distal end portion a grasping portion is mounted. This spherical shaft-supporting portion is supported by a pivot bearing. A slider is mounted at the side of the spherical shaft-supporting portion, which side is opposite the side at which the grasping portion is located. The slider slides longitudinally and laterally in accordance with the rotation operation of the shift lever. A sliding contact, which is provided at the slider, appropriately contacts a fixed contact of a fixed plate which is provided at the side of the slider opposite the side at which the shift lever is located.

In accordance with the above-described structure disclosed in JP-A No. 54-67684, it suffices to provide the fixed plate, which is the place where the position detecting means is, only beneath the shift lever. This overcomes the drawback of having to mount the position detecting means from various directions.

However, the structure disclosed in JP-A No. 54-67684 has the critical drawback that it can only be applied to structures in which the shift lever is supported by a pivot bearing. Namely, in a structure in which a member such as the control shaft or the like rotates around an axis whose axial direction is the substantially vehicle transverse direction and the bracket of the lever main body is mounted, with respect to the member such as the control shaft or the like, so as to be able to rotate around an axis whose axial direction is the substantially longitudinal direction of the vehicle, even if a separate lever were to extend downward, or the like, from the control shaft, this lever would only rotate around an axis whose axial direction is the substantially vehicle transverse direction.

Similarly, even if a separate lever were to extend from the bracket of the lever main body, this lever would only rotate around an axis whose axial direction is the substantially longitudinal direction of the vehicle.

Accordingly, the technique disclosed in JP-A No. 54-67684 cannot be utilized in such a structure.

Moreover, in the technique disclosed in JP-A No. 54-67684, the shift lever must be extended all the way to the side opposite the side at which the grasping portion is located, with the spherical shaft-supporting portion therebetween. As a result, it is difficult to make the shift lever device compact along the longitudinal direction of the shift lever. Moreover, because the slider and the like are provided within the housing of the shift lever device, there is the drawback that, when the slider is being assembled in, the housing interferes therewith and the work is difficult.

### SUMMARY OF THE INVENTION

In view of the aforementioned, an object of the present invention is to provide a device for detecting rotation in two directions which can detect rotation of a rotating member which rotates around axes whose axial directions are two directions which intersect one another, and which can be easily assembled into various types of devices, and to provide a shift lever device which can detect rotation of a shift lever which rotates around axes whose axial directions are two directions which are orthogonal to one another, and in which assembly of the structure which detects the rotation of the shift lever is easy, and which can be made compact on the whole.

A first aspect of the present invention is a device for detecting rotation in two directions, detecting rotation of a rotating member which rotates around a predetermined first axis direction and rotates around a predetermined second axis direction which intersects the first axis direction, the device comprising: first detecting means having a first rotating body which rotates around the first axis direction one of integrally with the rotating member and interlockingly with rotation of the rotating member around the first axis direction, and having a first detecting portion provided at one side of the rotating member along the first axis direction and one of electromagnetically and mechanically detecting rotation of the first rotating body; and second detecting means, provided at the one side of the rotating member along the first axis direction, for one of electromagnetically and mechanically detecting approach and movement away of the rotating member when the rotating member rotates in the direction around the second axis.

In accordance with the device for detecting rotation in two directions relating to the present aspect, when the rotating member rotates in the direction around the first axis, the first rotating body of the first detecting means rotates together with the rotating member. This rotation of the first rotating body is detected electromagnetically or mechanically by the first detecting portion of the first detecting means which is provided at one side of the rotating member along the first axis direction. In this way, the rotation of the rotating member in the direction around the first axis is detected.

On the other hand, when the rotating member rotates around the second axis direction which intersects the first axis direction, the rotation of the rotating member around the second axis direction is detected electromagnetically or mechanically by the second detecting portion of the second detecting means which is provided at one side of the rotating member along the first axis direction.

In this way, in the device for detecting rotation in two directions relating to the present aspect, rotation of the rotating member around the first axis direction and around the second axis direction can be detected.

Here, in the device for detecting rotation in two directions relating to the present aspect, both the first detecting portion of the first detecting means and the second detecting means are provided at one (the same) side of the rotating member along the first axis direction. Therefore, the first detecting portion of the first detecting means and the second detecting means can be made integral as a single unit, and the mounting (assembly) of the present device for detecting rotation in two directions, with respect to various types of devices which are structured to include the rotating member, can be carried out easily.

At the first detecting means, the first detecting portion detects, at one side of the rotating member along the first axis direction, the rotation of the first rotating body which is integral with or interlocked with rotation of the rotating member around the first axis direction. The second detecting means detects rotation of the rotating member at one side of the rotating member along the first axis direction. Namely, the device for detecting rotation in two directions relating to the present invention is not a structure (such as the structure disclosed in above-discussed JP-A No. 54-67684) which detects rotation of a rotating member at the side opposite the rotating member, with respect to the rotation axial center of the rotating member along both the first axis direction and the second axis direction located therebetween.

Therefore, as compared with a structure which detects the rotation of the rotating member at the side opposite the rotating member, with respect to the rotation axial center of the rotating member, it suffices to not elongate the member, which rotates together with the rotating member, as far as the side of the rotation axial center which side is opposite the rotating member, and the overall device can be made compact.

In a second aspect of the present invention, the second detecting means of the above-described first aspect has: a moving body moving in the first axis direction due to the rotating member rotating toward at least one side in the direction around the second axis; and a second detecting portion detecting, one of directly and indirectly, movement of the moving body along the first axis direction.

In accordance with the device for detecting rotation in two directions relating to the present aspect, when the rotating member rotates toward at least one side in the direction around the second axis, the moving body moves along the first axis direction due to the rotation of the rotating member. When the moving body moves in the first axis direction in this way, the movement of the moving body is detected directly or indirectly by the second detecting portion which structures the second detecting means. The rotation of the rotating member around the second axis direction is thereby detected.

In a third aspect of the present invention, the second detecting means of the above-described second aspect has a second rotating body which, interlockingly with the movement of the moving body, rotates in a direction around an axis parallel to the first axis direction, and the second detecting portion detects rotation of the second rotating body.

In accordance with the device for detecting rotation in two directions relating to the present aspect, when the rotating member rotates toward at least one side in the direction around the second axis, the moving body moves along the first axis direction due to the rotation of the rotating member. When the moving body moves in the first axis direction, the second rotating body rotates around an axis which is parallel to the first axis direction. Due to the second detecting portion detecting the rotation of the second rotating body, the rotation of the rotating member around the second axis direction is detected.

Here, both the first rotating body of the first detecting means and the second rotating body of the second detecting means rotate around axes whose axial directions are the same direction (the first axis direction and a direction parallel to the first axis direction). Namely, the first detecting portion and the second detecting portion are both structures which detect rotation. Accordingly, the first detecting portion and the second detecting portion can be made to have the same structure, and, as a result, the manufacturing costs of the first detecting portion and the second detecting portion can be effectively reduced.

In a fourth aspect of the present invention, a shift lever device comprises: a shift lever having a first lever supported so as to be able to rotate around a predetermined first axis direction, and a second lever supported at the first lever so as to be able to rotate around a second axis direction which intersects the first axis direction; first detecting means having 1) a first rotating body which is connected at a side of a rotating shaft of the first lever along the first axis direction, to the rotating shaft one of directly and indirectly, and which rotates together with the first lever, and 2) a first detecting portion for detecting rotation of the first rotating body one of electromagnetically and mechanically; and second detecting means provided at a side of the second lever at which side the first detecting means is provided along the first axis direction with respect to the shift lever, the second detecting means including a second detecting portion for detecting, one of electromagnetically and mechanically, displacement of the second lever along the first axis direction due to rotation of the second lever around the second axis direction, wherein the shift lever device controls a transmission installed in a vehicle, on the basis of results of detection of the first detecting means and the second detecting means.

In accordance with the shift lever device relating to the present aspect, the first lever which structures the shift lever is supported, directly or indirectly, so as to be able to rotate in the direction around the first axis. The first rotating body of the first detecting means is connected, directly or indirectly, to the rotating shaft of the first lever, at a side of the rotating shaft of the first lever along the first axis direction. Due to the first lever rotating, the first rotating body rotates together with the first lever.

The rotation of the first lever is detected electromagnetically or mechanically by the first detecting portion of the first detecting means. The rotation of the shift lever along the direction around the first axis is thereby detected.

On the other hand, the second lever is connected to the first lever, and the second lever can be rotated, with respect to the first lever, around the second axis direction which intersects the first axis direction. When the second lever is rotated around the second axis direction, the rotation of the second lever is detected electromagnetically or mechanically by the second detecting portion of the second detecting means. In this way, the rotation of the shift lever along the direction around the second axis is detected.

In the shift lever device relating to the present aspect, a transmission, which is installed in a vehicle, is operated in accordance with the results of detection of the first detecting portion and the second detecting portion at the time when the shift lever is rotated around the first axis direction and around the second axis direction as described above. For example, the transmission is changed to a shift range or a gear corresponding to the rotational position of the shift lever around the first axis direction and around the second axis direction.

Here, in the shift lever device relating to the present aspect, the second detecting means is provided at the side at which the first detecting means is provided along the first axis direction with respect to the shift lever. Therefore, the first detecting means and the second detecting means can be made integral as a single unit, and the assembly work and the like thereof can be carried out easily.

Further, the second detecting means detects the rotation of the second lever along the first axis direction at the time when the second lever rotates around the second axis direction. Therefore, the second detecting means does not have to be mechanically connected to the rotating shaft of the second lever, and such a connecting member or the like is not needed, and the device can be made compact overall.

In a fifth aspect of the present invention, the shift lever device based on the above-described fourth aspect further comprises a housing having a pair of side walls which are provided so as to oppose one another, and between which the shift lever is disposed, and which rotatably support the first lever, wherein, at an outer side of one side wall of the pair of side walls, the first detecting means and the second detecting means are mounted to the one side wall of the pair of side walls.

In accordance with the shift lever device relating to the present aspect, the shift lever is provided between the pair of side walls which structure the housing, and the first lever is pivotally supported at the pair of side walls.

On the other hand, in the shift lever device relating to the present aspect, the first detecting means and the second detecting means are provided at the outer side of one side wall of the pair of side walls (i.e., at the side of one side wall of the pair of side walls, which side is opposite the other side wall). The first detecting means and the second detecting means are mounted to the one side wall of the pair of side walls. Therefore, the first detecting means and the second detecting means can be made integral as a single unit. In addition, as compared with a structure which detects rotation of the shift lever by providing a sensor or the like at the inner side of the housing, the assembly and removal of the first detecting means and the second detecting means are easy, and the routing of the wiring and the like also can be made to be easy.

In a sixth aspect of the present invention, the second detecting means of the above-described fourth or fifth aspect has: a moving body passing through the one side wall of the pair of side walls and provided so as to be slidable in a direction parallel to the first axis direction, and due to an end portion of the moving body within the housing being pressed one of directly and indirectly by the second lever which rotates around the second axis direction in a direction of approaching the one side wall of the pair of side walls, the moving body slides toward an outer side of the one side wall of the pair of side walls; and a second rotating body disposed so as to oppose the other end of the moving body, and rotating around an axis, whose axial direction is a direction parallel to the first axis direction, due to pushing force from the other end of the moving body along a direction parallel to the first axis direction. Each of the first rotating body and the second rotating body is structured to have a permanent magnet at which an orientation of poles is set in a direction orthogonal to the first axis direction. Each of the first detecting portion and the second detecting portion is a magnetic detecting means for detecting changes in a magnetic field of the permanent magnet which are generated by rotation of the permanent magnet.

In the shift lever device relating to the present aspect, when the first lever rotates around the first axis direction and the first rotating body rotates, the orientation of the poles of the permanent magnet structuring the first rotating body changes. When the orientation of the poles changes due to the rotation of the permanent magnet in this way, a change arises in the magnetic field which the permanent magnet forms. This change in the magnetic field is detected by the magnetic detecting means which structures the first detecting portion.

On the other hand, when the second lever rotates around the second axis direction and the second lever approaches one side wall of the pair of side walls structuring the housing, the end portion of the moving body which passes through the one side wall is pushed directly or indirectly by the second lever and slides. When the moving body receives the pushing force from the second lever and slides, the other end of the moving body pushes the second rotating body.

When the second rotating body receives the pushing force from the moving body, the second rotating body rotates around an axis whose axial direction is a direction parallel to (the same direction as) the first axis direction. When the second rotating body rotates in this way, the orientation of the poles of the permanent magnet structuring the second rotating body changes. When the orientation of the poles changes due to the rotation of the permanent magnet in this way, a change arises in the magnetic field which the permanent magnet forms. This change in the magnetic field is detected by the magnetic detecting means which structures the second detecting portion.

Here, the present shift lever device is structured by magnetic detecting means in which both the first detecting portion and the second detecting portion have basically the same operation. In this way, by using parts of basically the same specifications for the first detecting portion and the second detecting portion, the number of types of parts can be reduced, and costs can be reduced.

As described above, the device for detecting rotation in two directions relating to the present invention can detect rotation of a rotating member which rotates around axes whose axial directions are two directions which intersect one another, and can be easily assembled into various types of devices.

Further, in the shift lever device relating to the present invention, rotation of a shift lever, which rotates around axes whose axial directions are two directions which are orthogonal to one another, can be detected, and assembly of the structure which detects rotation of the shift lever is easy, and the shift lever device can be made compact on the whole.

### BRIEF DESCRIPTION OF THE DRAWINGS

Fig. 1 is an exploded perspective view of a main portion (a device for detecting rotation in two directions relating to a first embodiment of the present invention) of a shift lever device relating to the first embodiment of the present invention.
Fig. 2 is an exploded perspective view showing the overall structure of the shift lever device relating to the embodiment of the present invention.
Fig. 3 is a perspective view showing the structure of a moving body and a second rotating body.
Fig. 4 is a plan view of a housing, and illustrates shift positions of a shift lever.
Fig. 5 is a sectional view showing the relationship between the shift lever and the moving body.
Fig. 6 is block diagram summarily showing the relationship between an automatic transmission and first and second detecting portions.
Fig. 7 is an exploded perspective view of a main portion (a device for detecting rotation in two directions relating to a second embodiment of the present invention) of a shift lever device relating to the second embodiment of the present invention.

### DETAILED DESCRIPTION OF THE INVENTION

### <Structure of First Embodiment>

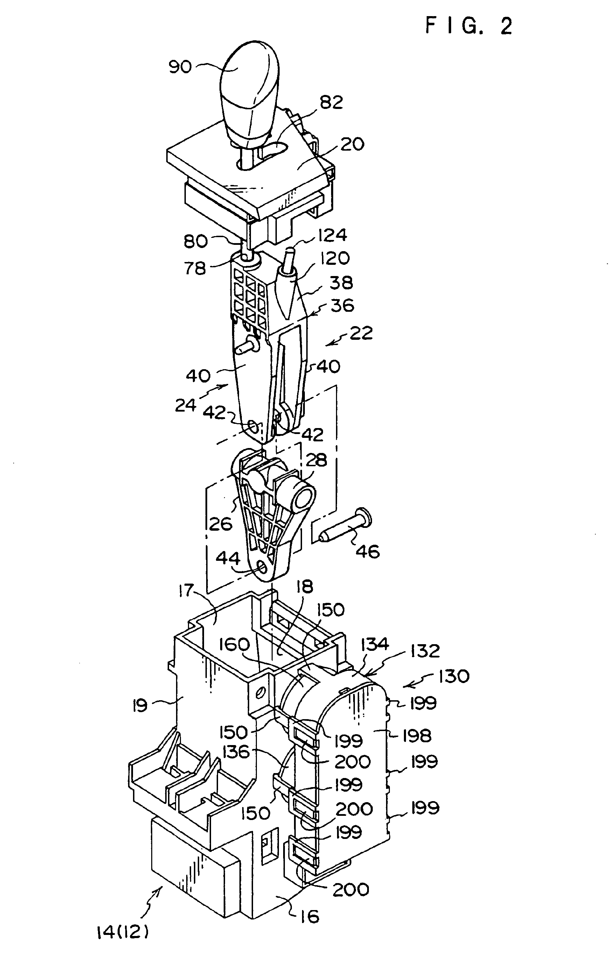

The structure of a shift lever device 10 relating to a first embodiment of the present invention is shown in an exploded perspective view in Fig. 2. As shown in Fig. 2, the present shift lever device 10 has a lower housing 14 which structures a housing 12. The lower housing 14 is provided at, for example, a predetermined position at the front side of a vehicle between the driver's seat and the front passenger's seat. Examples of this predetermined position are beneath the front side of the console box, at the reverse surface side of the instrument panel, and the like.

The lower housing 14 is formed in the shape of a tube having a substantially rectangular cross-sectional configuration, and includes a pair of side walls 16, 17 which oppose one another substantially along the transverse direction of the vehicle, and a pair of side walls 18, 19 which oppose one another substantially along the longitudinal direction of the vehicle. The upper side open end of the lower housing 14 in Fig. 2 is closed by an upper housing 20. The top surface of the upper housing 20 is exposed to the interior of the vehicle passenger compartment. By closing the open end of the lower housing 14 by the upper housing 20, the various members at the interior of the lower housing 14 are hidden, and the entry of foreign matter and the like therein is prohibited or suppressed.

A lever main body 24 which structures a shift lever 22 is provided at the inner side of the lower housing 14. The lever main body 24 has a retainer 26 serving as a first lever. The retainer 26 is formed, in front view, in the shape of an upside-down triangle whose bottom end is the apex. A substantially tubular tube portion 28, which passes through along the direction in which the side walls 16, 17 oppose one another, is formed at the top end portion of the retainer 26.

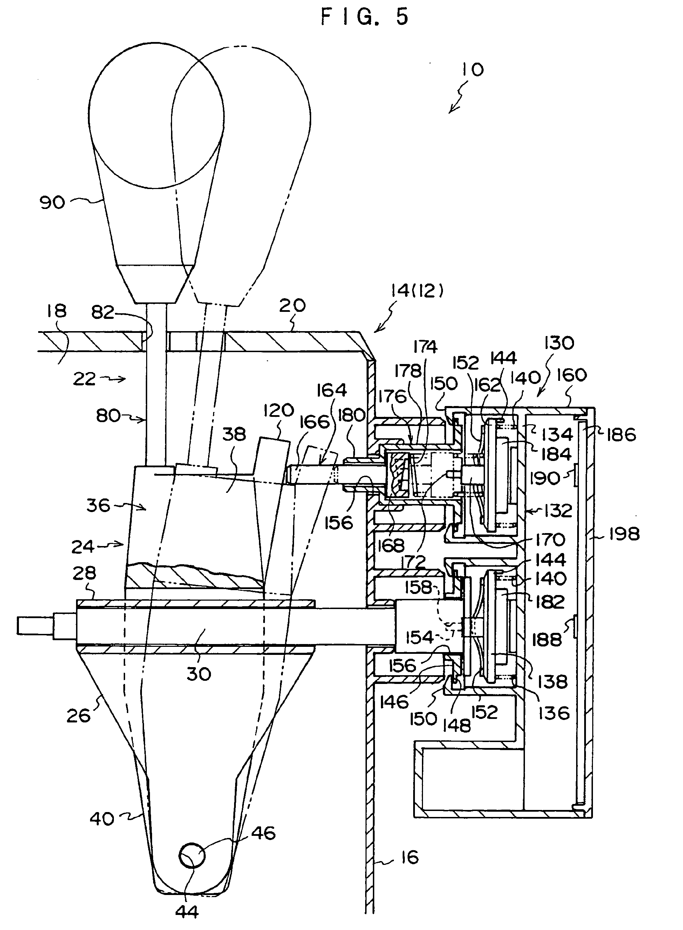

A shaft 30 (see Fig. 5), whose axial direction is along the direction in which the side walls 16, 17 oppose one another, is connected substantially integrally to the tube portion 28 in a state of passing therethrough. The both axial direction end sides of the shaft 30 pass through the side walls 16, 17 and are supported by the side walls 16, 17. The retainer 26 and the shaft 30 are thereby supported so as to be able to rotate around the axial center of the shaft 30.

The lever main body 24 has a body 36 as a second lever. The body 36 has a block-shaped base portion 38. A pair of leg plates 40 extend from the bottom end portion of the base portion 38. The directions of thickness of the both leg plates 40 are along the direction in which the side walls 18, 19 oppose one another, and the leg plates 40 are formed as to oppose one another along the direction in which the side walls 18, 19 oppose one another.

The interval between the leg plates 40 is slightly larger than the thickness of the above-described retainer 26, and the retainer 26 is disposed between these leg plates 40. Through-holes 42, which pass-through along the direction of thickness of the leg plates 40, are formed in the lower end portions of the leg plates 40. A through-hole 44 is formed in the lower end portion of the retainer 26 so as to correspond to the through-holes 42. A shaft 46, whose axial direction runs along the direction in which the side walls 18, 19 oppose one another, passes through the through-holes 42, 44. The body 36 is supported so as to be able to rotate around the shaft 46, relative to the retainer 26.

A circular hole 78 having a bottom is formed in the top surface of the base portion 38 of the body 36. The proximal end portion of a lever member 80, which is rod-shaped and structures the shift lever 22, is inserted in and fixed integrally to the circular hole 78. At the longitudinal direction intermediate portion of the lever member 80, the lever member 80 passes through a substantially "backward h" shaped shift hole 82 formed in the upper housing 20, and extends to the outer side of the upper housing 20. A knob 90 is mounted to the lever member 80 which extends to the outer side of the upper housing 20.

On the other hand, a pin accommodating portion 120 which is tubular is formed in the base portion 38 of the body 36, at the side of the lever member 80. The pin accommodating portion 120 is open at the upper end portion thereof in Fig. 2. A compression coil spring (not illustrated) and a pin 124 are accommodated in the pin accommodating portion 120. A gate member (not shown), in which a return groove is formed, is disposed at the reverse side of the upper housing 20 and at the inner side of the lower housing 14, in correspondence with the pin 124.

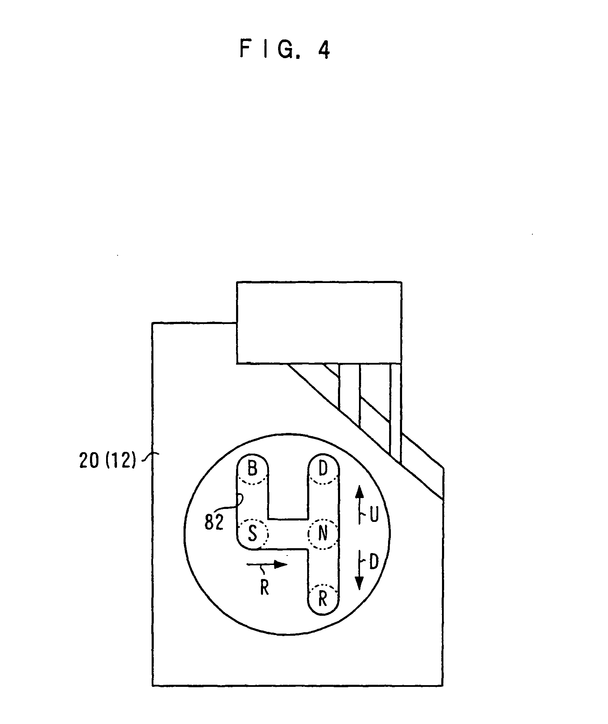

The return groove is a bottomed-groove formed at the reverse side of a top floor. In plan view (as reverse surface view), the return groove is formed in a substantially "backward h" shape, in the same way as the shift hole 82. In the state in which the pin 124 compresses the compression coil spring from above, the top end of the pin 124 is set in the return groove, and press-contacts the top side floor of the return groove due to the urging force of the compression coil spring. Moreover, the top side floor of the return groove is slanted appropriately. In the state in which the lever main body 24 is positioned at a return position S in the shift hole 82 shown in Fig. 4, the position of the return groove, which position is the same as the return position, is where the return groove is the deepest. In the state in which the pin 124 is positioned at a position other than the return position S, the urging force of the compression coil spring attempts to return the pin 124 to the return position S.

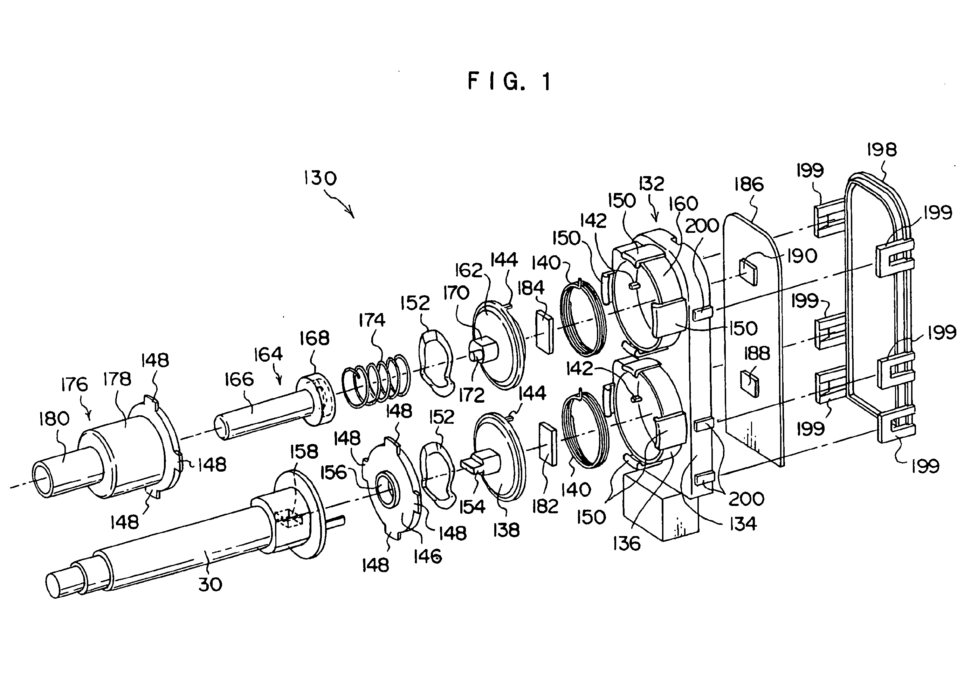

On the other hand, as shown in Fig. 2, a sensor unit 130, which serves as a device for detecting rotation in two directions, is provided at the side of the side wall 16, which side is opposite the side at which the side wall 17 is located. As shown in Fig. 1, the sensor unit 130 has a base 132. The base 132 has a shallow main body 134 which opens toward the side opposite the side wall 16. A holder 136, which is substantially cylindrical tube shaped, is formed at the reverse surface side of the floor portion of the main body 134.

A rotating plate 138, which serves as a first rotating body, is accommodated within the holder 136, substantially coaxially with the holder 136. A spring 140 is accommodated within the holder 136, between the floor portion of the base 132 and the rotating plate 138. One end of the spring 140 engages with a projection 142 formed at the inner peripheral portion of the holder 136. Another end of the spring 140 engages with a projection 144 which projects from the rotating plate 138. When the rotating plate 138 rotates around its own center within the holder 136, the other end of the spring 140 rotates with respect to the one end thereof. Urging force, which attempts to return the rotating plate 138 to its original rotational position, is thereby generated.

A disc-shaped cover 146 is provided at the side of the rotating plate 138 opposite the side at which the spring 140 is located. Engaging pieces 148 are formed to project from the outer peripheral portion of the cover 146. Due to engaging claws 150, which are formed at the outer peripheral portion of the holder 136, engaging with the engaging pieces 148, the cover 146 closes the open end side of the holder 136 and prevents the rotating plate 138 from falling-out. Moreover, a ring spring 152 is interposed between the cover 146 and the rotating plate 138. Displacement of the rotating plate 138 along the axial direction thereof is restricted by the urging force of the ring spring 152.

A key 154 is formed to project from the center of the cover 146 side end surface of the rotating plate 138. The key 154 passes through a through-hole 156 formed in the cover 146, and fits in a key groove 158 formed in the side wall 16 side end surface of the shaft 30. In the state in which the key 154 is fit in the key groove 158, the rotating plate 138 is connected coaxially to the shaft 30, and when the shaft 30 rotates around its own axial center, the rotating plate 138 rotates together with the shaft 30.

On the other hand, a substantially cylindrical tube shaped holder 160 is formed at the reverse surface side of the floor portion of the main body 134 structuring the base 132.

The holder 160 is formed above the holder 136, in the state in which the base 132 is mounted to the side wall 16. The holder 160 is formed in the shape of a cylindrical tube which opens in the same direction as the direction of opening of the holder 136. A rotating plate 162, which serves as a second rotating body and structures a second detecting means, is accommodated within the holder 160, substantially coaxially with the holder 160.

The spring 140 is accommodated within the holder 160, between the floor portion of the base 132 and the rotating plate 162. One end of the spring 140 engages with the projection 142 formed at the inner peripheral portion of the holder 160. Another end of the spring 140 engages with the projection 144 which projects from the rotating plate 162. When the rotating plate 162 rotates around its own center within the holder 160, the other end of the spring 140 rotates with respect to the one end thereof. Urging force, which attempts to return the rotating plate 162 to its original rotational position, is thereby generated.

A plunger 164, which serves as a moving body and structures the second detecting means, is provided at the side of the rotating plate 162 opposite the side where the spring 140 is located. The plunger 164 has a main body 166. The main body 166 is a solid-cylindrical member whose axial direction is the same direction as the shaft 30. A cam portion 168 is formed at the base 132 side end portion, along the axial direction, of the main body 166.

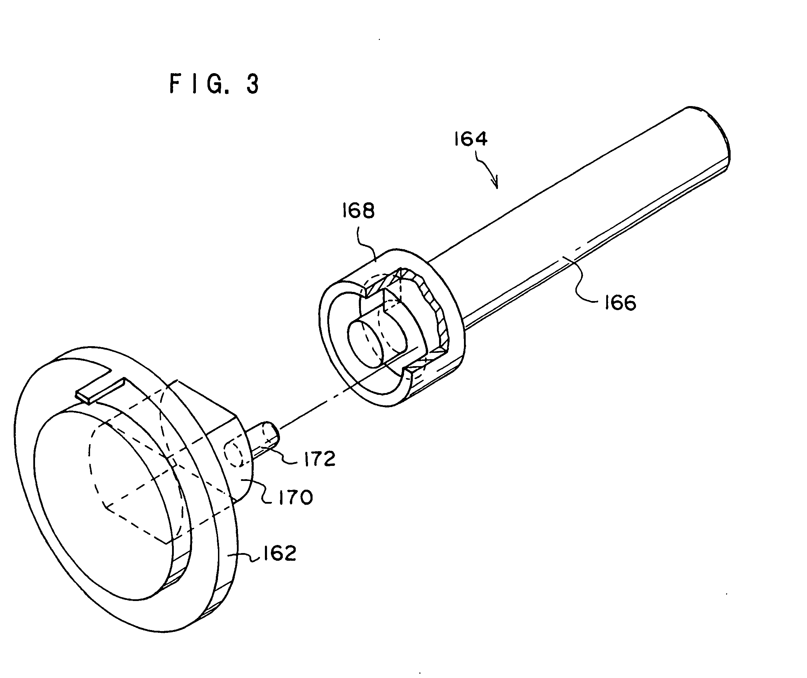

As shown in Fig. 3, the cam portion 168 is formed in the shape of a cylindrical tube which has a bottom and which opens toward the base 132. The outer diameter of the cam portion 168 is sufficiently larger than the outer diameter of the main body 166, and the cam portion 168 is formed integrally and coaxially with the main body 166.

Further, as shown in Fig. 3, the inner floor surface of the cam portion 168 is formed in the shape of a screw around the axial center of the cam portion 168, and gradually becomes deeper one way along the direction around the axis of the cam portion 168. An oval shaft portion 170 is formed at the substantial center of the cam portion 168 side surface of the rotating plate 162, so as to correspond to the cam portion 168. A pin 172 is formed to project from the end surface of the shaft portion 170, in a state of being eccentric with respect to the center of the rotating plate 162.

The shaft portion 170 is formed so as to be able to fit together with the inner side of the cam portion 168 and rotate around the axial center of the cam portion 168. In the state in which the shaft portion 170 is fit-in at the inner side of the cam portion 168, the distal end of the pin 172 abuts the inner floor surface of the cam portion 168.

As shown in Fig. 1, a return spring 174 is disposed between the cam portion 168 and the rotating plate 162. As mentioned above, the shaft portion 170 can fit-together with the inner side of the cam portion 168. The return spring 174 urges the plunger 164 in the direction of moving the cam portion 168 away from the shaft portion 170 (i.e., away from the rotating plate 162).

A cover 176 is provided at the side of the rotating plate 162 opposite the side at which the spring 140 is located. The cover 176 has a large diameter portion 178 which is formed in the shape of a cylindrical tube having a floor and which opens toward the base 132. The engaging pieces 148 are formed to project outwardly in the radial direction from the rotating plate 162 side end surface of the large diameter portion 178. Due to the engaging claws 150, which are formed at the outer peripheral portion of the holder 160, engaging with the engaging pieces 148, the cover 176 closes the open end side of the holder 160, and prevents the rotating plate 162 from falling-out.

A small diameter portion 180, which is shaped as a cylindrical tube, is formed coaxially and integrally with the large diameter portion 178, at the end portion of the large diameter portion 178 at the side opposite the side where the rotating plate 162 is located. The end portion of the small diameter portion 180, which end portion is at the side opposite the large diameter portion 178, is open. The end portion of the small diameter portion 180, which end portion is at the large diameter portion 178 side, opens at the floor portion of the large diameter portion 178. The inner diameter of the small diameter portion 180 is slightly larger than the outer diameter of the main body 166 of the plunger 164, and is sufficiently smaller than the outer diameter of the cam portion 168.

As shown in Fig. 5, the small diameter portion 180 passes through a through-hole 156 formed in the side wall 16, and projects into the housing 12.

As shown in Fig. 1, the distal end side of the main body 166 of the plunger 164 which is urged by the aforementioned return spring 174 (i.e., the side opposite the cam portion 168) passes through the small diameter portion 180 and opposes the base portion 38 of the body 36.

Moreover, as shown in Fig. 1, the ring spring 152 is interposed between the rotating plate 162 and the large diameter portion 178 of the cover 176. Displacement of the rotating plate 162 along the axial direction thereof is restricted by the urging force of the ring spring 152.

On the other hand, as shown in Fig. 1, a magnet 182, which serves as a permanent magnet and structures a first detecting means, is fixed to the end surface of the rotating plate 138 at the side opposite the side wall 16. The magnet 182 is formed in the shape of a rectangle whose longitudinal direction runs along the radial direction of the rotating plate 138. One side of the magnet 182, with respect to the center of the rotating plate 138, is the N pole, and the other side is the S pole.

A magnet 184, which serves as a permanent magnet and structures the second detecting means, is fixed to the end surface of the rotating plate 162 at the side opposite the side wall 16. In the same way as the magnet 182, the magnet 184 is formed in the shape of a rectangle whose longitudinal direction runs along the radial direction of the rotating plate 162. One side of the magnet 184, with respect to the center of the rotating plate 162, is the N pole, and the other side is the S pole.

A PC board 186 is provided at the side of the base 132 opposite the side at which the holders 136, 160 are located. Printed wiring (not shown) is formed on the PC board 186, and electrical elements, such as resistor elements and the like, are appropriately mounted thereto.

A magnetic sensor 188 is provided at the PC board 186 so as to oppose the magnet 182. The magnetic sensor 188 is structured by a Hall element or a magneto resistance element (including a so-called giant magneto resistance element), and detects the fluctuations in the magnetism formed by the magnet 182 (the changes in the strength of the magnetic field, or the changes in the orientation of the magnetic field, or the like).

Moreover, a magnetic sensor 190 is provided at the PC board 186 so as to oppose the magnet 184. In the same way as the magnetic sensor 188, the magnetic sensor 190 is structured by a Hall element or a magneto resistance element (including a so-called giant magneto resistance element), and detects the fluctuations in the magnetism formed by the magnet 184 (the changes in the strength of the magnetic field, or the changes in the orientation of the magnetic field, or the like).

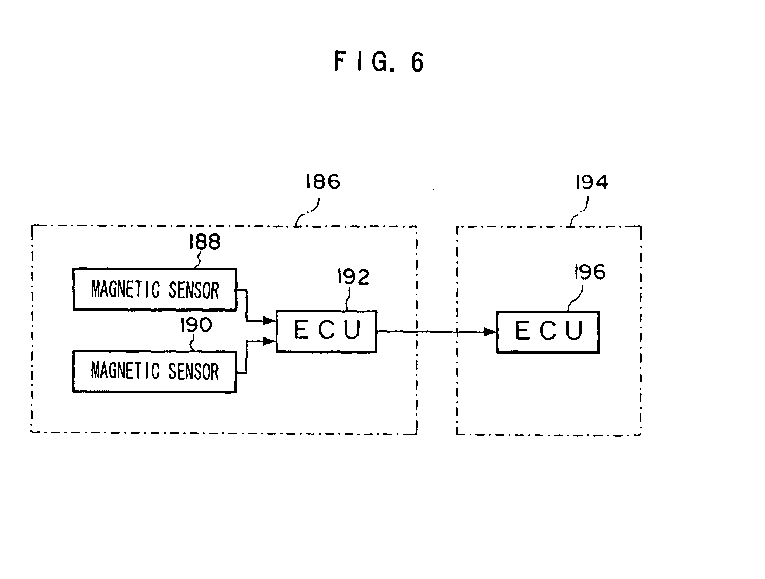

As shown in the block diagram of Fig. 6, the magnetic sensors 188, 190 are connected to an ECU 192 which is provided on the PC board 186. On the basis of the output signals from the magnetic sensors 188, 190, the ECU 192 detects the rotational position of the shift lever 22, and outputs these results of detection to an ECU 196 of an automatic transmission 194. The ECU 196 appropriately operates the automatic transmission 194 in accordance with the output (the results of detection) from the ECU 192.

A cover 198 is provided at the side of the PC board 186 opposite the side at which the magnetic sensors 188, 190 are located. The cover 198 is held at the base 132 due to fit-together portions 200, which are formed at the outer peripheral portion of the base 132, being fit into holes of fit-together pieces 199, which are formed at the outer peripheral portion of the cover 198. In the state in which the cover 198 is held at the base 132, the side of the base 132, at which side the PC board 186 is accommodated, is closed by the cover 198, and the PC board 186 is thereby prevented from falling-out.

### <Operation and Effects of First Embodiment>

The operation and effects of the present embodiment will be described next.

In the present shift lever device 10, when, from the state in which the lever main body 24 passes through the shift hole 82 at the S position in Fig. 4, the knob 90 is grasped and the shift lever 22 is pushed toward the right in Fig. 4 (in the direction of arrow R in Fig. 4), the body 36 rotates around the shaft 46 with respect to the retainer 26. The lever member 80 thereby passes through the shift hole 82 at the N position of Fig. 4.

When the body 36 rotates around the shaft 46 with respect to the retainer 26 in this way, as shown by the two-dot chain line in Fig. 5, the body 36 pushes the main body 166 of the plunger 164. The plunger 164, which is pushed by the body 36, slides, against the urging force of the return spring 174, substantially toward the right in Fig. 5 along a direction parallel to (the same direction as) the axial direction of the shaft 30. When the plunger 164 slides in this way, the inner floor surface of the cam portion 168 pushes the pin 172 which is formed at the shaft portion 170 of the rotating plate 162.

Because the rotating plate 162 basically cannot be displaced along the axial direction thereof, the pin 172, which is pushed by the cam portion 168, rotates around the axial center of the cam portion 168 so as to be displaced toward the deeper side of the inner floor surface of the cam portion 168 which is formed in a spiral. In this way, the rotating plate 162 rotates against the urging force of the spring 140.

When the rotating plate 162 rotates, the orientation of the poles of the magnet 184 fixed to the rotating plate 162 changes, and accompanying this change, the magnetism which the magnet 184 forms fluctuates. This fluctuation in the magnetism formed by the magnet 184 is detected by the magnetic sensor 190 provided at the PC board 186.

Next, when, from this state, the knob 90 is pushed upward in Fig. 4 (in the direction of arrow U in Fig. 4) and the body 36 and the retainer 26 rotate around the axial center of the shaft 30 until the lever member 80 passes through the shift hole 82 at position D of Fig. 4, the shaft 30 rotates accompanying this. Due to the shaft 30 rotating, the rotating plate 138 rotates substantially integrally therewith, and the orientation of the poles of the magnet 182 fixed to the rotating plate 138 thereby changes. Accompanying this change, the magnetism formed by the magnet 182 fluctuates. This fluctuation in the magnetism formed by the magnet 182 is detected by the magnetic sensor 188 provided at the PC board 186.

On the other hand, after the shift lever 22 is rotated from the S position to the N position as described above, when the knob 90 is pushed downward in Fig. 4 (in the direction of arrow D in Fig. 4) and the body 36 and the retainer 26 rotate around the axial center of the shaft 30 until the lever member 80 passes through the shift hole 82 at position R of Fig. 4, the shaft 30 rotates accompanying this. Due to the shaft 30 rotating, the rotating plate 138 rotates substantially integrally therewith, and the orientation of the poles of the magnet 182 fixed to the rotating plate 138 thereby changes. Accompanying this change, the magnetism formed by the magnet 182 fluctuates. This fluctuation in the magnetism formed by the magnet 182 is detected by the magnetic sensor 188 provided at the PC board 186.

In contrast, when, from the state in which the lever main body 24 passes through the shift hole 82 at the S position in Fig. 4, the knob 90 is pushed upward in Fig. 4 (in the direction of arrow U in Fig. 4) and the body 36 and the retainer 26 rotate around the axial center of the shaft 30 until the lever member 80 passes through the shift hole 82 at position B of Fig. 4, the shaft 30 rotates accompanying this. Due to the shaft 30 rotating, the rotating plate 138 rotates substantially integrally therewith, and the orientation of the poles of the magnet 182 fixed to the rotating plate 138 thereby changes. Accompanying this change, the magnetism formed by the magnet 182 fluctuates.

This fluctuation in the magnetism formed by the magnet 182 is detected by the magnetic sensor 188 provided at the PC board 186. However, in this case, because the body 36 does not push the plunger 164, the rotating plate 162 does not rotate, and accordingly, no fluctuations arise in the magnetism formed by the magnet 184.

As described above, depending on which of the S position, the D position, the R position and the B position the lever main body 24 passes through the shift hole 82 at, the signal outputted from at least one of the magnetic sensors 188, 190 differs. On the basis of the differences in the signals, at the ECU 192 of the PC board 186, it is determined at which of the S position, the D position, the R position and the B position the lever member 80 (i.e., the shift lever 22) is positioned.

The ECU 192 outputs a signal which is based on the results of determination of the position of the lever member 80. The signal outputted by the ECU 192, i.e., the results of determination of the position of the lever member 80, is inputted to the ECU 196 as a signal.

If, based on the signal from the ECU 192, it is determined that the position of the lever member 80 is the D position, the ECU 196 changes the shift range to the drive range (D range), and the vehicle is set in a state in which it can proceed forward. If the position of the lever member 80 is the R position, the ECU 196 changes the shift range to the reverse range (R range), and the vehicle is set in a state in which it can move backward.

Further, if it is determined that the position of the lever member 80 is the B position, the ECU 196 changes the shift range to the engine brake (B range), so as to change to a shift range mainly using gears having a relatively low gear ratio. When, in a state in which the vehicle is originally traveling by using gears having a relatively high gear ratio, the shift range is changed in this way to a shift range mainly using gears of a low gear ratio, a state in which the so-called engine brake is applied arises.

In the sensor unit 130 which is applied to the present shift lever device 10, the rotating plate 138, the magnet 182, and the magnetic sensor 188, which detect the rotation of the shaft 30, are provided at the outer side of the side wall 16. Further, the plunger 164, the rotating plate 162, the magnet 184, and the magnetic sensor 190, which detect the rotation of the body 36 around the shaft 46, are also provided at the outer side of the side wall 16, in the same way as the rotating plate 138 and the like.

Therefore, as in the present embodiment, the plunger 164, the rotating plates 138, 162, the magnets 182, 184, and the magnetic sensors 188, 190 can be made into a unit, and assembly thereof to the housing 12 is easy.

Further, the structure for detecting the rotation of the shaft 30 (i.e., the rotating plate 138, the magnet 182, and the magnetic sensor 188), and the structure for detecting the rotation of the body 36 around the shaft 46 (i.e., the plunger 164, the rotating plate 162, the magnet 184, and the magnetic sensor 190) are basically mounted to the side wall 16 as an integral unit. Therefore, no structure for detecting the rotation of the shift lever 22 is disposed beneath the shift lever 22, i.e., beneath the retainer 26. In this way, the lower housing 14 can be formed to be short, and as a result, the device can be made more compact overall.

In the present embodiment, the sliding of the plunger 164 is changed, by the cam portion 168, into rotation of the rotating plate 162, and the rotation of the rotating plate 162 is detected by the magnetic sensor 190 as a fluctuation in the magnetism of the magnet 184. Therefore, although the structures of the key 154 and the shaft portion 170 may differ, the same structure of the spring 140 and the ring spring 152 can basically be applied at both the rotating plate 138 side and the rotating plate 162 side. Further, with regard to the magnets 182, 184 and the magnetic sensors 188, 190 as well, the same structure can be applied at both the rotating plate 138 side and the rotating plate 162 side. Because the number of common parts can be increased in this way, the costs of the parts can be reduced as a result.

Further, because the magnetic sensor 188 and the magnetic sensor 190 can be formed to have basically the same structure, the processing of the signals from the magnetic sensor 188 and the processing of the signals from the magnetic sensor 190 are the same. Therefore, the signal processing system at the ECU 192 can be simplified, and for this reason as well, costs can be reduced.

### <Second Embodiment>

A second embodiment of the present invention will be described next.

In the explanation of the present embodiment, regions which are basically the same as those of the above-described first embodiment are denoted by the same reference numerals, and description thereof will be omitted.

The structure of a sensor unit 212, which serves as a device for detecting rotation in two directions and which is a main portion of a shift lever device 210 relating to the present embodiment, is illustrated in an exploded perspective view corresponding to Fig. 1 which is used in describing the above first embodiment.

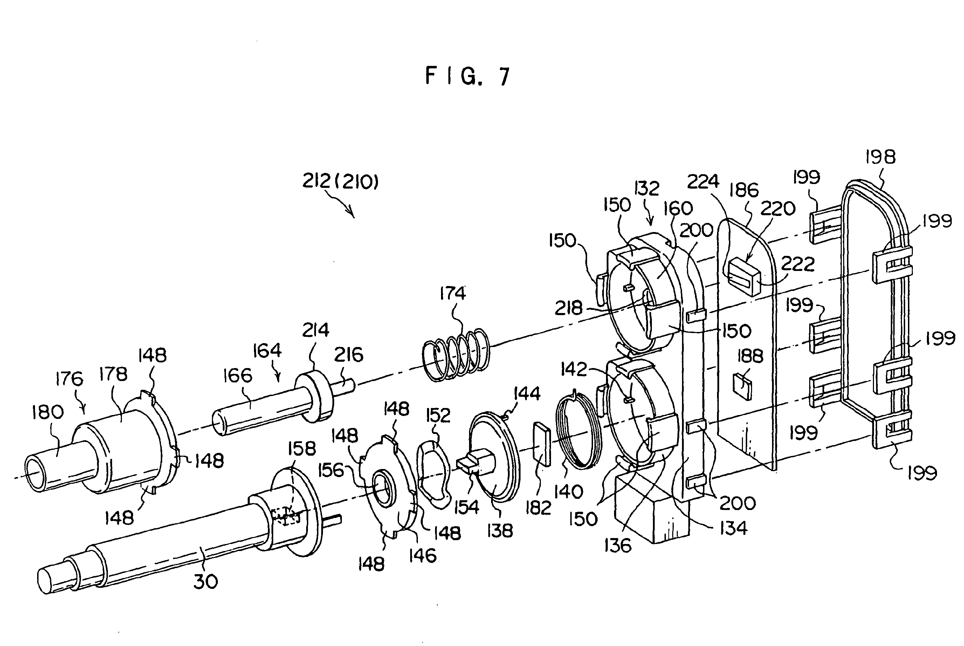

As shown in Fig. 7, the sensor unit 212 does not have the ring spring 152, the rotating plate 162, the spring 140, and the magnet 184. In addition, the plunger 164 of the sensor unit 212 does not have the cam portion 168.

Instead of the cam portion 168, a spring anchor piece 214 is formed at the plunger 164, coaxially and integrally with the main body 166. The spring anchor piece 214 is disc-shaped, the axial direction dimension thereof is relatively short, and the spring anchor piece 214 has a larger diameter than that of the main body 166. One end of the return spring 174 abuts the end surface of the spring anchor piece 214, which end surface is at the side opposite the main body 166.

A push rod 216 is formed at the spring anchor piece 214. The push rod 216 is provided coaxially and integrally with the main body 166 and the spring anchor piece 214. The push rod 216 projects from the end surface of the spring anchor piece 214, which end surface is at the side opposite the main body 166, and passes through the inner side of the return spring 174, and, at the inner side of the holder 160, passes through a through-hole 218 formed in the main body 134 of the base 132, and projects out to the side of the main body 134 opposite the side at which the holder 160 is located.

On the other hand, instead of the magnetic sensor 190, a microswitch 220, which structures the second detecting portion of the second detecting means, is provided at the PC board 186. The microswitch 220 has a swinging piece 224 whose proximal end portion is connected to a main body 222, and whose distal end side can be displaced in directions of approaching the main body 222 and moving away from the main body 222.

The distal end side of the swinging piece 224 opposes the distal end portion of the push rod 216 along the axial direction of the plunger 164. When the plunger 164 is displaced toward the cover 198 side against the urging force of the return spring 174, the push rod 216 pushes the distal end side of the swinging piece 224, and makes the distal end side of the swinging piece 224 approach the main body 222. When the distal end side of the swinging piece 224 approaches the main body 222 in this way, a fixed contact and a moving contact provided at the main body 222 contact one another and are made conductive.

Namely, at the sensor unit 212 of the present shift lever device 210, when the body 36 rotates around the shaft 46 with respect to the retainer 26 and the body 36 pushes the main body 166 of the plunger 164 as shown by the two-dot chain line in Fig. 5, the plunger 164 slides along the direction parallel to (the same direction as) the axial direction of the shaft 30, substantially toward the right in Fig. 5 against the urging force of the return spring 174.

When the plunger 164 slides in this way, the push rod 216 slides toward the cover 198, and pushes the swinging piece 224, and makes the distal end side of the swinging piece 224 approach the main body 222. In this way, due to the moving contact within the main body 222 contacting the fixed contact and becoming conductive, the fact that the push rod 216 has moved, and accordingly, the fact that the body 36 has rotated around the shaft 46 with respect to the retainer 26, is detected.

In this way, in the present embodiment, the principles for detecting that the body 36 has rotated around the shaft 46 with respect to the retainer 26 are different than in the above-described first embodiment. However, in the same way as in the first embodiment, the microswitch 220, the plunger 164, and the like are, as is the case with the magnetic sensor 188, the magnet 182, and the like, provided at the outer side of the side wall 16.

Therefore, in the present embodiment as well, in the same way as in the above-described first embodiment, the plunger 164 and the microswitch 220 can be made into a unit together with the rotating plate 138, the magnet 182, and the magnetic sensor 188, and assembly thereof to the housing 12 is easy. Moreover, by forming a unit in this way and installing the unit at the side wall 16, no structure for detecting the rotation of the shift lever 22 is disposed beneath the shift lever 22, i.e., beneath the retainer 26. In this way, the lower housing 14 can be formed to be short, and as a result, the device can be made more compact overall.

## Claims

1. A device for detecting rotation in two directions, which detects rotation of a rotating member (22) that rotates around a predetermined first axis (30) direction and rotates around a predetermined second axis (46) direction which intersects the first axis direction, the device comprising:
first detecting means (138, 182, 188) having a first rotating body (138) which rotates around the first axis direction one of integrally with the rotating member and interlockingly with rotation of the rotating member, and having a first detecting portion (182, 188) provided at one side of the rotating member along the first axis direction and one of electromagnetically and mechanically detecting rotation of the first rotating body; and
second detecting means (164, 162, 184, 190, 220), provided at the one side of the rotating member along the first axis direction, for one of electromagnetically and mechanically detecting approach and movement away of the rotating member when the rotating member rotates in the direction around the second axis.

2. The device for detecting rotation in two directions of claim 1, wherein the second detecting means (164, 162, 184, 190, 220) has:
a moving body (164) moving in the first axis direction due to the rotating member rotating toward at least one side in the direction around the second axis; and
a second detecting portion (184, 190, 220) detecting, one of directly and indirectly, movement of the moving body along the first axis direction.

3. The device for detecting rotation in two directions of claim 2, wherein the second detecting means (164, 162, 184, 190) has a second rotating body (162) which, interlockingly with the movement of the moving body (164), rotates in a direction around an axis parallel to the first axis direction, and the second detecting portion detects rotation of the second rotating body.

4. The device for detecting rotation in two directions of claim 3, wherein the movement of the moving body (164) along the first axis direction is converted, by a cam mechanism, into the rotation of the second rotating body (162) around the first axis.

5. The device for detecting rotation in two directions of claim 3, wherein the second detecting portion has a magnetic sensor (190), and the second rotating body (162) has a permanent magnet (184) at which an orientation of the poles is set to a direction orthogonal to the first axis, and the rotation of the second rotating body (162), i.e., the permanent magnet (184), is detected by the magnetic sensor (190).

6. The device for detecting rotation in two directions of claim 2, wherein the second detecting means (164, 220) has a second detecting portion (220) which is turned on/off interlockingly with the movement of the moving body (164), and the second detecting portion (220) detects rotation of the rotating member (22) around the second axis.

7. The device for detecting rotation in two directions of claim 6, wherein the second detecting portion (220) is a microswitch.

8. The device for detecting rotation in two directions of claim 1, wherein the first detecting means (138, 182, 188) has:
the first rotating body (138) which can rotate around the first axis together with the rotating member (22); and
the first detecting portion (182, 188) detecting, one of electromagnetically and mechanically, the rotation of the first rotating body (138).

9. The device for detecting rotation in two directions of claim 1, wherein a specific rotational state of the rotating member in two directions can be determined in accordance with absence/presence of detection and a type of detection results of each of the first detecting means and the second detecting means.

10. A shift lever device comprising:
a shift lever (22) having a first lever (26) supported so as to be able to rotate around a predetermined first axis (30) direction, and a second lever (36) supported at the first lever so as to be able to rotate around a second axis direction (46) which intersects the first axis direction;
first detecting means (132, 182, 188) having a first rotating body (138) which is connected at a side of a rotating shaft (30) of the first lever along the first axis direction, to the rotating shaft one of directly and indirectly, and which rotates together with the first lever, and a first detecting portion (182, 188) for detecting rotation of the first rotating body one of electromagnetically and mechanically; and
second detecting means (164, 162, 184, 190, 220) provided at a side of the second lever (36) at which side the first detecting means is provided along the first axis direction with respect to the shift lever (22), the second detecting means including a second detecting portion (184, 190) for detecting, one of electromagnetically and mechanically, displacement of the second lever along the first axis direction due to rotation of the second lever around the second axis direction,
wherein the shift lever device controls a transmission installed in a vehicle, on the basis of results of detection of the first detecting means and the second detecting means.

11. The shift lever device of claim 10, further comprising a housing (12) having a pair of side walls (16, 17) which are provided so as to oppose one another, and between which the shift lever (22) is disposed, and which rotatably support the first lever (26),
wherein, at an outer side of one side wall (16) of the pair of side walls, the first detecting means (132, 182, 188) and the second detecting means (164, 162, 184, 190, 220) are mounted to the one side wall of the pair of side walls.

12. The shift lever device of claim 11, wherein the second detecting means (164, 162, 168, 184, 190) has:
a moving body (164) passing through the one side wall (16) of the pair of side walls and provided so as to be slidable in a direction parallel to the first axis direction, and due to an end portion of the moving body within the housing (12) being pressed one of directly and indirectly by the second lever (36) which rotates around the second axis direction in a direction of approaching the one side wall (16) of the pair of side walls, the moving body slides toward an outer side of the one side wall (16) of the pair of side walls; and
a second rotating body (162) disposed so as to oppose the other end (168) of the moving body (164), and rotating around an axis, whose axial direction is a direction parallel to the first axis direction, due to pushing force from the other end of the moving body along a direction parallel to the first axis direction,
wherein each of the first rotating body (138) and the second rotating body (162) has a permanent magnet (182, 184) at which an orientation of poles is set in a direction orthogonal to the first axis direction, and
each of the first detecting portion (182, 188) and the second detecting portion (184, 190) is a magnetic detecting means for detecting changes in a magnetic field of the permanent magnet which are generated by rotation of the permanent magnet.

13. The shift lever device of claim 12, wherein movement of the moving body (164) along the direction parallel to the first axis direction is converted, by a cam mechanism, into rotation of the second rotating body (162) around the first axis.

14. The shift lever device of claim 11, wherein the second detecting means (164, 220) has a moving body (164) passing through the one side wall (16) of the pair of side walls and provided so as to be slidable in a direction parallel to the first axis direction, and due to an end portion of the moving body within the housing (12) being pressed one of directly and indirectly by the second lever (40) which rotates around the second axis direction in a direction of approaching the one side wall (16) of the pair of side walls, the moving body slides toward an outer side of the one side wall (16) of the pair of side walls,
the second detecting portion has a second detecting portion (220) which is turned on/off interlockingly with movement of the moving body (164), and
the second detecting portion (220) detects rotation of the rotating member (22) around the second axis.

15. The shift lever device of claim 14, wherein the second detecting portion (220) is a microswitch.

16. The shift lever device of claim 10, wherein a specific rotational state of the rotating member in two directions can be determined in accordance with absence/presence of detection and a type of detection results of each of the first detecting means and the second detecting means.

## Patentansprüche

1. Eine Vorrichtung zum Detektieren einer Drehung in zwei Richtungen, die die Drehung eines sich drehenden Elements, das sich um eine erste Achse (30) und um eine die erste Achse schneidende zweite Achse (46) dreht, erkennt, mit:
ersten Detektionsmitteln (138,182, 188) mit einem ersten Drehkörper (138), der sich um die erste Achse entweder einstückig mit dem Drehelement oder mit einer Drehung des Drehelements verriegelt dreht, und einen ersten Detektionsabschnitt (182, 188), der an einer Seite des Drehelements entlang der erste Achse vorgesehen ist und elektromechanisch oder mechanisch eine Drehung des ersten Drehkörpers erkennt,
zweiten Detektionsmitteln (164, 162, 184, 190, 220), die an einer Seite des Drehelements entlang der ersten Achse vorgesehen sind und elektromagnetisch oder mechanisch eine Annäherung an und eine Entfernung von dem Drehelement erkennten, wenn das Drehelement sich in der Richtung um die zweite Achse dreht.

2. Die Vorrichtung zum Detektieren einer Drehung in zwei Richtungen nach Anspruch 1, wobei die zweiten Detektionsmittel (164, 162, 184, 190, 220) aufweisen:
- einen Bewegungskörper (164), der sich in Richtung der ersten Achse aufgrund einer Rückwärtsdrehung des Drehelements an wenigstens einer Seite in der Richtung um die zweite Achse bewegt; und
- einen zweiten Detektionsabschnitt (184, 190, 220), der direkt oder indirekt eine Bewegung des Bewegungskörpers entlang der Richtung der ersten Achse erkennt.

3. Die Vorrichtung zum Detektieren einer Drehung in zwei Richtungen nach Anspruch 2, wobei die zweiten Detektionsmittel (164, 162, 184, 190) einen zweiten Drehkörper (162) aufweisen, der mit der Bewegung des Bewegungskörpers (164) verriegelt sich in eine Richtung um eine Achse parallel zu der Richtung der ersten Achse dreht und der zweite Detektionsabschnitt eine Drehung des zweiten Drehkörpers erkennt.

4. Eine Vorrichtung zum Detektieren einer Drehung in zwei Richtungen nach Anspruch 3, wobei die Bewegung des Bewegungskörpers (164) entlang der Richtung der ersten Achse durch einen Nockenmechanismus in eine Drehung des zweiten Körpers (162) um die erste Achse gewandelt wird.

5. Die Vorrichtung zum Detektieren einer Drehung in zwei Richtungen nach Anspruch 3, wobei der zweite Detektionsabschnitt einen magnetischen Sensor (190) hat und der zweite Drehkörper (162) einen Permanentmagneten (184) hat, bei dem eine Orientierung der Pole in eine Richtung senkrecht zu der ersten Achse eingestellt ist und die Drehung des zweiten Drehkörpers (162), d. h., des Permanentmagneten (184), von dem Magnetsensor (190) erkannt wird.

6. Die Vorrichtung zum Detektieren einer Drehung in zwei Richtungen nach Anspruch 2, wobei die zweiten Detektionsmittel (164, 220) einen zweiten Detektionsabschnitt (220) haben, der mit der Bewegung des Bewegungskörpers (164) verriegelt ein-/ausgeschaltet wird und der zweite Detektionsabschnitt (220) eine Drehung des Drehelements (22) um die zweite Achse detektiert.

7. Die Vorrichtung zum Detektieren einer Drehung in zwei Richtungen nach Anspruch 6, wobei der zweite Detektionsabschnitt (220) ein Mikroschalter ist.

8. Die Vorrichtung zum Detektieren einer Drehung in zwei Richtungen nach Anspruch 1, wobei die ersten Detektionsmittel (138, 182, 188) aufweisen:
- den ersten Drehkörper (138), der gemeinsam mit dem Drehelement (22) um die erste Achse drehen kann; und
- den ersten Detektionsabschnitt (182, 188), der elektromagnetisch oder mechanisch die Drehung des ersten Drehkörpers (138) erkennt.

9. Die Vorrichtung zum Detektieren einer Drehung in zwei Richtungen nach Anspruch 1, wobei ein bestimmter Drehzustand des Drehelements in zwei Richtungen in Übereinstimmung mit dem Vorhandensein/Fehlen der Detektion und einer Art der Detektionsergebnisse sowohl der ersten Detektionsmittel als auch der zweiten Detektionsmittel bestimmt werden kann.

10. Eine Schalthebeleinheit mit:
- einem Schalthebel (22) mit einem ersten Hebel (26), der so gestützt ist, dass er dazu in der Lage ist, um eine vorgegebene erste Achse zu drehen und einen zweiten Hebel (36), der an dem ersten Hebel so gestützt ist, dass er dazu in der Lage ist, um eine zweite Achse (46) zu drehen, die sich mit der ersten Achse schneidet;
- ersten Detektionsmittel (132, 182, 188) mit einem ersten Drehkörper (138), der an einer Seite einer Drehwelle (30) des ersten Hebels entlang der ersten Achse mit der Drehwelle direkt oder indirekt verbunden ist und der sich gemeinsam mit dem ersten Hebel dreht, und einem ersten Detektionsabschnitt (182, 188) zum elektromagnetischen oder mechanischen Detektieren einer Drehung des ersten Drehkörpers; und
zweite Detektionsmittel (164, 162, 184, 190, 220), die an einer Seite des ersten Hebels (36) vorgesehen sind, an der die ersten Detektionsmittel entlang der ersten Achse bezüglich des Schalthebels (22) vorgesehen sind, wobei die zweiten Detektionsmittel einen zweiten Detektionsbereich (184, 190) zum elektromechanischen oder mechanischen Detektieren einer Verlagerung des zweiten Hebels entlang der ersten Achse aufgrund einer Drehung des zweiten Hebels um die zweite Achse aufweisen, und wobei die Schalthebeleinheit ein in einem Fahrzeug vorgesehenes Getriebe auf der Grundlage der Detektion der ersten Detektionsmittel und der zweiten Detektionsmittel steuert.

11. Die Schalthebeleinheit nach Anspruch 10, weiter mit einem Gehäuse (12) mit einem Paar von Seitenwänden (16, 17), die einander gegenüberstehen und zwischen denen der Schalthebel (22) angeordnet ist und die den ersten Hebel (26) drehbar lagern,
wobei an einer Außenseite einer Seitenwand (16) des Paares von Seitenwänden die ersten Detektionsmittel (132, 182, 188) und die zweiten Detektionsmittel (164, 162, 184, 190 220) an einer Seitenwand des Paares von Seitenwänden montiert sind.

12. Die Schalthebeleinheit nach Anspruch 11, wobei die zweiten Detektionsmittel (164, 162, 168, 184, 190) aufweisen:
einen Bewegungskörper (164), der durch die eine Seitenwand (16) des Paares von Seitenwänden verläuft und so vorgesehen ist, dass er in einer Richtung parallel zu der Richtung der ersten Achse gleitbar ist und der Bewegungskörper in Richtung auf eine äußere Seite der einen Seitenwand (16) des Paares von Seitenwänden gleitet, weil ein Endabschnitt des Bewegungskörpers in dem Gehäuse (12) entweder direkt oder indirekt von dem zweiten Hebel (36) niedergedrückt wird, der um die zweite Achse in einer Richtung des Annäherns an die eine Seitenwand (16) des Paares von Seitenwänden gedrückt wird,
einen zweiten Drehkörper (162), der dem anderen Ende (168) des Bewegungskörpers (164) gegenüberliegt und sich um die Achse dreht, dessen axiale Richtung parallel zu der Richtung der ersten Achse ist, aufgrund der von dem anderen Ende des Bewegungskörpers entlang einer Richtung parallel zu der Richtung der ersten Achse ausgeübten Druckkraft,
wobei sowohl der erste Drehkörper (138) als auch der zweite Drehkörper (162) einen Permanentmagneten (182, 184) haben, bei dem die Ausrichtung der Pole in einer Richtung senkrecht zu der Richtung der ersten Achse eingestellt ist, und
sowohl das erste Detektionsmittel (182, 188) als auch der zweite Detektionsabschnitt (184, 190) eine magnetisch detektierendes Mittel zum Detektieren von Änderungen in dem magnetischen Feld des Permanentmagneten, die durch eine Drehung des Permanentmagneten erzeugt wird, ist.

13. Die Schalthebeleinheit nach Anspruch 12, wobei eine Bewegung des Bewegungskörpers (164) entlang der Richtung parallel zu der Richtung der ersten Achse durch einen Nockenmechanismus in eine Drehung des zweiten Drehkörpers (162) um die erste Achse gewandelt wird.

14. Die Schalthebeleinheit nach Anspruch 11, wobei die zweiten Detektionsmittel (164, 220) einen Bewegungskörper (164) aufweisen, der durch eine Seitenwand (16) des Paares von Seitenwänden verläuft und so ausgebildet ist, dass er in eine Richtung parallel zu der Richtung der ersten Achse gleitbar ist und der Bewegungskörper in Richtung auf eine Außenseite der einen Seitenwand (16) des Paares von Seitenwänden gleitet, weil der Endbereich des Bewegungskörpers in dem Gehäuse 12 entweder direkt oder indirekt von dem zweiten Hebel (40), der um die Richtung der zweiten Achse in eine Richtung des Annäherns an eine Seitenwandung (16) des Paares von Seitenwänden gedrückt wird,
der zweite Detektionsabschnitt einen zweiten Detektionsabschnittt (220) hat, der mit der Bewegung des zweiten Bewegungskörpers (164) verriegelt ein/ausgeschaltet wird, und
der zweite Detektionsabschnitt (22) eine Drehung des Rotationselements (22) um die zweite Achse detektiert.

15. Die Schalthebeleinheit nach Anspruch 14, wobei der zweite Detektionsabschnitt (220) ein Mikroschalter ist.

16. Die Schalthebeleinheit nach Anspruch 10, wobei ein bestimmter Drehzustand des Drehelements in zwei Richtungen in Übereinstimmung mit dem Vorhandensein/Fehlen der Detektion und eines Typs von Detektionsergebnissen sowohl der ersten Detektionsmittel und der zweiten Detektionsmittel bestimmt werden kann.

## Revendications

1. Dispositif pour détecter une rotation dans deux directions, lequel détecte la rotation d'un élément rotatif (22) qui tourne autour d'une direction d'un premier axe (30) prédéterminée et qui tourne autour d'une direction d'un second axe (46) prédéterminée entrant en intersection avec la direction du premier axe, lequel dispositif comprend :
- un premier moyen de détection (138, 182, 188) comportant un premier corps rotatif (138) qui tourne autour de la direction du premier axe, d'une pièce avec l'élément rotatif ou se verrouillant à l'élément rotatif lors de la rotation, et comportant une première partie de détection (182, 188) disposée à un côté de l'élément rotatif le long de la direction en premier axe et détectant électromagnétiquement ou mécaniquement la rotation du premier corps rotatif ; et
- un second moyen de détection (164, 162, 184, 190, 220) disposé à un côté de l'élément rotatif le long de la direction en premier axe afin de détecter électromagnétiquement ou mécaniquement le rapprochement ou l'écartement de l'élément rotatif lorsque l'élément rotatif tourne dans la direction autour du second axe.

2. Dispositif pour détecter une rotation dans deux directions selon la revendication 1, dans lequel le second moyen de détection comprend :
- un corps mobile (164) se déplaçant dans la direction du premier axe du fait que l'élément rotatif tourne vers au moins un côté dans la direction autour du second axe ; et
- une seconde partie de détection (184, 190, 220) détectant, directement ou indirectement, le mouvement du corps mobile le long de la direction du premier axe.

3. Dispositif pour détecter une rotation dans deux directions selon la revendication 2, dans lequel le second moyen de détection (164, 162, 184, 190) comprend un second corps rotatif (162) qui, en se verrouillant avec le mouvement du corps mobile (164), tourne dans une direction autour d'un axe parallèle à la direction du premier axe, et la seconde partie de détection détecte la rotation du second corps rotatif.

4. Dispositif pour détecter une rotation dans deux directions selon la revendication 3, dans lequel le mouvement du corps mobile (164) le long de la direction du premier axe est converti, par un mécanisme de came, en rotation du second corps rotatif (162) autour du premier axe.

5. Dispositif pour détecter une rotation dans deux directions selon la revendication 3, dans lequel la seconde partie de détection comporte un capteur magnétique (190), et le second corps rotatif (162) comprend un aimant permanent (184) pour lequel l'orientation dés pôles est fixée dans une direction orthogonale au premier axe, et la rotation du second corps rotatif (162), c'est à dire l'aimant permanent (184), est détectée par le capteur magnétique (190).

6. Dispositif pour détecter une rotation dans deux directions selon la revendication 2, dans lequel le second moyen de détection (164, 220) comprend une seconde partie de détection (220) qui est activée/désactivée par verrouillage avec le mouvement du corps mobile (164), laquelle seconde partie de détection (220) détecte la rotation de l'élément rotatif (22) autour du second axe.

7. Dispositif pour détecter une rotation dans deux directions selon la revendication 6, dans lequel la seconde partie de détection (220) consiste en un micro-commutateur.

8. Dispositif pour détecter une rotation dans deux directions selon la revendication 1, dans lequel le premier moyen de détection (138, 182, 188) comprend :
- le premier corps rotatif (138) qui peut tourner autour du premier axe avec l'élément rotatif (22) ; et
- la première partie de détection (182, 188) détectant, électromagnétiquement ou mécaniquement, la rotation du premier corps rotatif (138).

9. Dispositif pour détecter une rotation dans deux directions selon la revendication 1, dans lequel un état de rotation spécifique de l'élément rotatif dans deux directions peut être déterminé en fonction de l'absence/présence de détection et d'un type de résultats de détection de chacun des premier moyen de détection et second moyen de détection.

10. Dispositif à levier de commutation comprenant :
- un levier de commutation (22) comportant un premier levier (26) supporté de manière à pouvoir tourner autour d'une direction d'un premier axe (30) prédéterminée, et un second levier (36) supporté au niveau du premier levier de manière à pouvoir tourner autour d'une direction d'un second axe (46) prédéterminée entrant en intersection avec la direction du premier axe ;
- un premier moyen de détection (132, 182, 188) comportant un premier corps rotatif (138) qui est connecté, au niveau d'un côté d'un arbre rotatif (30) du premier levier le long de la direction du premier axe, à l'arbre rotatif directement ou indirectement, et qui tourne.avec le premier levier, et une première partie de détection (182, 188) pour détecter électromagnétiquement ou mécaniquement la rotation du premier corps rotatif ; et
- un second moyen de détection (164, 162, 184, 190, 220) disposé au niveau d'un côté du second levier (36), côté au niveau duquel le premier moyen de détection est disposé le long de la direction du premier axe par rapport au levier de commutation (22), lequel second moyen de détection comprend une seconde partie de détection (184, 190) afin de détecter électromagnétiquement ou mécaniquement le déplacement du second levier le long de la direction du premier axe du fait de la rotation du second levier autour de la direction du second axe ;
lequel dispositif à levier de commutation commande une transmission installée dans un véhicule en fonction des résultats de détection du premier moyen de détection et du second moyen de détection.

11. Dispositif à levier de commutation selon la revendication 10, comprenant en outre un boîtier (12) possédant deux parois latérales (16, 17) qui sont disposées de manière à s'opposer l'une à l'autre, et entre lesquelles le levier de commutation (22) est disposé, et qui supportent en rotation le premier levier (26) ;
dans lequel, au niveau d'un côté externe d'une paroi latérale (16) de la paire de parois latérales, le premier moyen de détection (132, 182, 188) et le second moyen de détection (164, 162, 184, 190, 220) sont montés sur ladite paroi latérale de la paire de parois latérales.

12. Dispositif à levier de commutation selon la revendication 11, dans lequel le second moyen de détection (164, 162, 168, 184, 190) comprend :
- un corps mobile (164) passant à travers ladite paroi latérale (16) de la paire de parois latérales et disposé de manière à pouvoir coulisser dans une direction parallèle à la direction du premier axe et, du fait qu'une partie d'extrémité du corps mobile dans le boîtier (12) est pressée directement ou indirectement par le second levier (36) qui tourne autour de la direction du second axe dans une direction de rapprochement de ladite paroi latérale (16) de la paire de parois latérales, le corps mobile coulisse vers un côté externe de la paroi latérale (16) de la paire de parois latérales ; et
- un second corps rotatif (162) disposé de manière à s'opposer à l'autre extrémité (168) du corps mobile (164) et tournant autour d'un axe, dont la direction axiale est une direction parallèle à la direction du premier axe, du fait de la force de poussée depuis l'autre extrémité du corps mobile le long d'une direction parallèle à la direction du premier axe ;
dans lequel chacun des premier corps rotatif (138) et second corps rotatif (162) comprend un aimant permanent (182, 184) pour lequel l'orientation des pôles est fixée dans une direction orthogonale à la direction du premier axe, et chacune des première partie de détection (182, 188) et seconde partie de détection (184, 190) est un moyen de détection magnétique pour détecter les changements d'un champ magnétique de l'aimant permanent qui sont générés par la rotation de l'aimant permanent,

13. Dispositif à levier de commutation selon la revendication 12, dans lequel le mouvement du corps mobile (164) le long de la direction parallèle à la direction du premier axe est converti, par un mécanisme de came, en rotation du second corps rotatif (162) autour du premier axe.

14. Dispositif à levier de commutation selon la revendication 11, dans lequel le second moyen de détection (164, 220) comprend un corps mobile (164) passant à travers une paroi latérale (16) de la paire de parois latérales et disposé de manière à pouvoir coulisser dans une direction parallèle à la direction du premier axe et, du fait qu'une partie d'extrémité du corps mobile dans le boîtier (12) est pressée directement ou indirectement par le second levier (40) qui tourne autour de la direction du second axe dans une direction de rapprochement de ladite paroi latérale (16) de la paire de parois latérales, le corps mobile coulisse vers un côté externe de ladite paroi latérale (16) de la paire de parois latérales ;
la seconde partie de détection comprend une seconde partie de détection (220) qui est activée/désactivée par verrouillage avec le mouvement du corps mobile (164) ; et
la seconde partie de détection (220) détecte la rotation de l'élément rotatif (22) autour du second axe.

15. Dispositif à levier de commutation selon la revendication 14, dans lequel le second moyen de détection (220) est un micro-commutateur.

16. Dispositif à levier de commutation selon la revendication 10, dans lequel un état de rotation spécifique de l'élément rotatif dans deux directions peut être déterminé en fonction de l'absence/présence de détection et d'un type de résultats de détection de chacun des premier moyen de détection et second moyen de détection.
